# EUROPÄISCHE PATENTSCHRIFT

(11) **EP 1 296 842 B1**
(45) Veröffentlichungstag und Bekanntmachung des Hinweises auf die Patenterteilung: **04.05.2011**
(21) Anmeldenummer: 02742761.6
(22) Anmeldetag: 16.05.2002
(51) Int. Cl.: B60G 9/00, B60G 7/00

(54) **ACHSSCHWINGE**
AXLE LOCATING ROD
MANIVELLE OSCILLANTE D'ESSIEU

(30) Priorität: 18.05.2001 DE 10118623
(43) Veröffentlichungstag der Anmeldung: 02.04.2003
(73) Patentinhaber: ZF Lemförder Metallwaren AG, 49441 Lemförde (DE)
(72) Erfinder: BUHL, Reinhard, 49163 Bohmte (DE); COSSMANN, Uwe, 49545 Tecklenburg (DE); KNOPP, Sören, 49179 Ostercappeln (DE); DIENER, Andre, 49086 Osnabrück (DE); RICHTER, Reinhard, 49163 Bohmte (DE)
(86) Internationale Anmeldenummer: PCT/DE2002/001781
(87) Internationale Veröffentlichungsnummer: WO 2002/094592

(56) Entgegenhaltungen:
- WO-A-96/22896
- WO-A-99/36279
- DE-A- 4 338 651
- DE-C- 3 718 533
- DE-U- 9 218 307
- GB-A- 873 877
- US-A- 5 549 320
- US-A- 5 649 719
- US-B1- 6 231 264
- US-B1- 6 270 282
- PATENT ABSTRACTS OF JAPAN vol. 1995, no. 01, 28. Februar 1995 (1995-02-28) & JP 06 286442 A (HINO MOTORS LTD), 11. Oktober 1994 (1994-10-11)

## Beschreibung

Die Erfindung betrifft eine Achsschwinge zur Anbindung einer Achse an den Fahrzeugaufbau eines Kraftfahrzeuges.

Achsschwingen sind aus dem Stand der Technik bekannt und werden unter anderem auch als Lenker zur Führung einer Kraftfahrzeugachse bezeichnet.

In der DE 37 18 533 C1 ist ein aus zwei Achsstreben bestehender Dreieckslenker zur Führung von LKW-Hinterachsen offenbart, die einenends an zwei Lagerstellen am Fahtzeugaufbau anlenkbar und anderenends an einem Kugelgelenk am Achskörper gelagert sind, wobei der Öffnungswinkel zwischen den Achsstreben verstellbar ist und das Kugelgelenk ein mehrteiliges Gelenkgehäuse und eine drehbar in dieses eingesetzte Gelenkkugel aufweist. Die Achsstreben ragen dabei in eine in der Gelenkkugel vorgesehene Aufnahme hinein, wobei in der Gelenkkugel ein Bolzen eingesetzt ist, der senkrecht zu den Achsstreben durch die Aufnahme verläuft und an dem die Achsstreben mit einer Bohrung gelagert sind. Das Gehäuse weist einen Flansch auf, mit dem es an den Achskörper montierbar ist.

Wegen der Vielzahl der Teile kann es zu Toleranzproblemen kommen, ferner ist die Montage dieses Dreieckslenkers besonders aufwendig. Aufgrund der Größe der Öffnung in dem Gelenkgehäuse ist eine Abdichtung des Gelenks gegen Schmutz und Feuchtigkeit nur mit erheblichem Aufwand zu realisieren. Auch sind die beiden Achsstreben nicht auf gleicher Höhe, so dass unerwünschte Biegemomente auftreten können.

Aus der DE 92 18 307 U1 ist ein Zentralgelenk eines Dreiecklenkers zu dessen Verbindung mit einer Achse im Fahrwerk eines Kraftfahrzeuges bekannt. Das Zentralgelenk besteht aus einem einteilig ausgebildeten oder gebauten Gehäuse, an dem die Lenkerarme angeordnet sind und einem mit dem Achskörper des Fahrzeuges fest verbundenen Gelenkinnenteil, welches in dem Gehäuse in einem molekular verformbaren Gelenkkörper angeordnet ist. Das Gelenkinnenteil ist als Kugelstück mit zwei einander gegenüberliegend aus dem Gehäuse herausgeführten Befestigungszapfen ausgebildet, deren gemeinsame Längsachse waagerecht parallel zur Fahrzeugachse angeordnet ist. An der dem Zentralgelenk abgewandten Seite sind die Lenkerarme jeweils über ein Strebengelenk an dem Fahrzeugchassis gelenkig befestigt. Zusammenfassend weist dieser Dreieckslenker das Merkmal auf, dass das achsseitige Gelenk in den Lenker integriert ist.

Da unterschiedliche Kraftfahrzeuge sich in ihrem Fahrzeugaufbau unterscheiden und abhängig vom Einsatzbereich auch unterschiedlichen Belastungen ausgesetzt sind, ist es erforderlich, für jedes dieser Kraftfahrzeuge eine individuell angepasste Achsschwinge zu entwickeln, zu fertigen und zu montieren. Die verschiedenen Achsschwingen unterscheiden sich zum Beispiel in einer unterschiedlichen Auslegung der Gelenke, in der Länge oder dem Durchmesser der Lenkerarme oder in dem von den Lenkerarmen eingeschlossenen Winkel. Ferner können die Lenkerarme mit den Gelenkgehäusen über eine Schraubverbindung oder über die Verfahren des Warmverpressens oder des Reibschweißens miteinander verbunden sein. Auch sind einteilige Gusskonstruktionen aus Eisen- oder Aluminiumwerkstoff möglich.

Eine derartige, auf den speziellen Fahrzeugtyp angepasste Fertigung, Lagerung und Montage von unterschiedlichen Achsschwingen ist aber sehr aufwendig und kostenintensiv, da stets eine große Anzahl von Varianten für den Markt bereitgehalten werden muss.

Des Weiteren zeigt die JP 06 286442 eine Achsschwinge mit einem Zentralgelenkinnenteil, welches aus einem Zentralgelenkgehäuse beidseitig herausragt und an dessen beiden Anschlusszapfen Schwenkarme befestigt sind. Diese Schwenkarme sind über Gummilager mit dem Zentralgelenkinnenteil verbunden und können somit in nachteiliger Weise keine Wankbewegungen abstützen und Querkräfte nur ungenügend abstützen. Zudem sind die Schwenkarme bedingt durch die Gummilagerung drehbar um das Zentralgelenkinnenteil gelagert, so dass auch hier eine doppelt weiche Lagerung vorhanden ist.

Die GB 873,877 offenbart eine Achsschwinge mit einem Zentralgelenkgehäuse, welches einstückig an einem Gehäuse eines Differentialgetriebes ausgebildet ist. In dem Zentralgelenkgehäuse ist ein Zentralgelenkinnenteil über eine Elastomerschicht gelagert, wobei das Zentralgelenkinnenteil an den einander gegenüberliegenden Seiten des Zentralgelenkgehäuses mit als Anschlusszapfen ausgebildeten Enden herausragt. Im Bereich der Anbindung an das Zentralgelenk ist ein einteiliger gabelförmig ausgebildeter Lenker über Lager drehbar an den Anschlusszapfen des Zentralgelenkinnenteils angebunden, so dass eine sehr weiche schwenkbare Anbindung des Lenkers gegeben ist. Der Lenker stellt in nachteiliger Weise auf Grund seiner einteiligen Ausbildung ein sehr komplexes und großes Bauteil dar.

Ausgehend von diesem Stand der Technik liegt der Erfindung die Aufgabe zu Grunde, eine Achsschwinge zur Anbindung einer Achse an den Fahrzeugaufbau eines Kraftfahrzeuges zu schaffen, mittels welcher der Aufwand und die Kosten für die Herstellung und die Montage, insbesondere im Hinblick auf die große Anzahl von unterschiedlichen Fahrzeugtypen reduziert werden können.

Diese Aufgabe wird erfindungsgemäß durch eine Achsschwinge zur Anbindung einer Achse an den Fahrzeugaufbau eines Kraftfahrzeuges mit den Merkmalen nach dem Patentanspruch 1 gelöst. Bevorzugte Weiterbildungen sind in den Unteransprüchen beschrieben.

Die erfindungsgemäße Achsschwinge zur Anbindung einer Achse an den Fahrzeugaufbau eines Kraftfahrzeuges weist einen an der Achse bzw. am Achskörper vorgesehenen Flansch, ein am bzw. im Flansch angeordnetes Zentralgelenk und zwei mit dem Zentralgelenk verbundene Schwenkarme auf, welche schwenkbar am Fahrzeugaufbau befestigt sind. Das Zentralgelenk weist ein Zentralgelenkgehäuse und ein in diesem schwenkbar gelagertes Zentralgelenkinnenteil auf, das mit seinen beiden als Anschlusszapfen ausgebildeten Enden an zwei einander gegenüberliegenden Seiten aus dem Gelenkgehäuse herausragt. Ferner ist zumindest ein Teil des Gehäuses einstückig mit dem Flansch ausgebildet, wobei die Schwenkarme mit ihren dem Zentralgelenk zugewandten Enden an den beiden Anschlusszapfen des Zentralgelenkinnenteils befestigt sind. Erfindungsgemäß sind die Schwenkarme an ihren dem Zentralgelenk zugewandten Endbereichen zusätzlich über ein Verbindungsstück fest miteinander verbunden. Das Verbindungsstück erhöht die Steifigkeit der erfindungsgemäßen Achsschwinge und beeinflusst somit deren Festigkeit und deren dynamisches Verhalten.

Das Verbindungsstück kann einteilig und materialhomogen mit den Schwenkarmen ausgebildet sein. Es ist aber auch möglich, das Verbindungsstück als ein- oder mehrteiliges Blechstück auszubilden, das nach der Montage der Achsschwinge an den Schwenkarmen festgeschweißt wird. Das Verbindungsstück kann jedoch auch zum Beispiel über Schrauben lösbar an den Schwenkarmen befestigt werden.

Bei der erfindungsgemäßen Achsschwinge sind die Schwenkarme nicht am Zentralgelenkgehäuse, sondern am Zentralgelenkinnenteil befestigt, so dass das Zentralgelenkgehäuse ein von den Schwenkarmen getrenntes Bauelement der Achsschwinge bildet. Somit können in einfacher Art und Weise unterschiedliche Zentralgelenke mit unterschiedlichen Schwenkarmen kombiniert werden. Dies ist insbesondere dann von Vorteil, wenn für unterschiedliche Kraftfahrzeuge zwar unterschiedliche Schwenkarme verwendet werden müssen, das Zentralgelenk aber identisch ausgelegt ist. Somit kann für unterschiedliche Fahrzeugtypen ein und dasselbe Zentralgelenk verwendet werden, welches zum Ausbilden der Achsschwinge lediglich mit den an den jeweiligen Fahrzeugtyp angepassten Schwenkarmen kombiniert wird. Unterschiedliche Zentralgelenke und unterschiedliche Schwenkarme können somit vom Hersteller in der Art eines Baukastensystems bereitgestellt und je nach Fahrzeugtyp angepasst kombiniert werden. Durch ein derartiges Baukastensystem werden der Aufwand und die Kosten für die Herstellung von Achsschwingen erheblich reduziert.

Ferner kann das Zentralgelenk der erfindungsgemäßen Achsschwinge näher an der Achse des Kraftfahrzeuges angeordnet werden, als das Zentralgelenkgehäuse einer herkömmlichen Achsschwinge, welches einteilig mit den Schwenkarmes ausgebildet ist. Bei der herkömmlichen Achsschwinge muss nämlich das Zentralgelenkgehäuse zum Flansch bzw. zur Achse einen Mindestabstand aufweisen, der eine Bewegung des Zentralgelenkgehäuses relativ zu dem Zentralgelenkinnenteil ermöglicht. Dies ist bei der erfindungsgemäßen Achsschwinge aber nicht erforderlich, da nicht das Zentralgelenkgehäuse, sondern das Zentralgelenkinnenteil fest mit den Schwenkarmen verbunden ist. Hierdurch kann Bauraum eingespart werden.

Auch ist das Zentralgelenkgehäuse zumindest zum Teil einstückig mit dem Flansch ausgebildet, so dass kein separates Befestigungsmittel zur Befestigung des Zentralgelenkgehäuses an dem Flansch erforderlich ist. Dies reduziert den Montageaufwand.

Die Verbindung zwischen dem Zentralgelenkinnenteil und den Schwenkarmen kann als lösbare oder unlösbare Verbindung über einen Reibschluss (z.B. Kegelverbindung, Ringfederspannelemente, Pressverband), über einen Formschluss (z.B. Kalottenverbindung, Stirnverzahnung) oder über einen Stoffschluss (z.B. Schweißen) erfolgen. Bevorzugt ist das Zentralgelenkinnenteil aber über eine Schraubenverbindung mit den Schwenkarmen verbunden. Diese lösbare Verbindung ermöglicht in einfacher Weise einen späteren Austausch einzelner Komponenten der erfindungsgemäßen Achsschwinge.

Der Flansch und das mit diesem zumindest zum Teil einstückig ausgebildete Zentralgelenkgehäuse können zum Beispiel miteinander verschweißt sein. Bevorzugt bilden der Flansch und das zumindest zum Teil mit diesem einstückig ausgebildete Zentralgelenkgehäuse aber ein einziges Gussteil. Als Werkstoffe für den Flansch und das Zentralgelenkgehäuse können duktile kristalline Materialen, wie zum Beispiel Eisenwerkstoffe (insbesondere Stahl) oder Aluminiumlegierungen (als Leichtbauwerkstoffe) verwendet werden. Ferner sind Konstruktionen aus Faserverbundwerkstoffen oder aus mit glasfaserverstärktem Kunststoff (GFK) umspritzten Alu- und/oder Stahlblechen in Sandwich-Anordnung möglich.

Der Flansch kann ein von der Achse separiertes Bauteil sein, dass zum Beispiel über eine Schrauben- oder eine Schweißverbindung an dem Achskörper befestigt ist. Bevorzugt ist der Flansch aber in den Achskörper integriert. Dies ist zum Beispiel dadurch realisierbar, dass der erfindungsgemäße Flansch und der Achskörper ein einziges Gussteil bilden.

Das Zentralgelenkgehäuse kann mehrteilig ausgebildet sein, wobei die unterschiedlichen Zentralgelenkgehäuseteile bei der Montage der Achsschwinge zusammengebaut werden müssen. Bevorzugt ist das Zentralgelenkgehäuse jedoch einteilig ausgebildet, wodurch der Montageaufwand reduziert wird.

Das Zentralgelenk kann als reines Schwenk-Gleitlager ausgebildet sein, um die Funktion der erfindungsgemäßen Achsschwinge sicher zu stellen. Bevorzugt ist das Zentralgelenk jedoch als Kugelgelenk ausgebildet, wobei das Zentralgelenkinnenteil zwischen den beiden Anschlusszapfen ein in dem Zentralgelenkgehäuse gelagertes Kugelstück aufweist. Gegenüber einem reinen Schwenk-Gleitlager weist das Kugelgelenk mehr Freiheitsgrade auf, so dass die Achse relativ zum Fahrzeugaufbau eine größere Bewegungsfreiheit hat und das Zentralgelenk im Fahrbetrieb des Kraftfahrzeuges weniger belastet wird. Der Begriff "Kugel" (bei den Ausdrücken Kugelgelenk und Kugelstück) ist hierbei nicht mathematisch eng auszulegen. Vielmehr ist unter dem Begriff "Kugel" eine zumindest teilweise hinsichtlich des Zentralgelenkinnenteils umlaufende und nach außen gerichtete Ausbeulung zu verstehen, die an dem Zentralgelenkinnenteil zwischen den Anschlusszapfen ausgebildet ist. Diese Ausbeulung kann zum Beispiel mit einer Teilkugelfläche im mathematischen Sinn versehen sein. Bevorzugt weist die Ausbeulung aber eine teilweise abgeflachte Teilkugelfläche auf.

Das Zentralgelenk kann als reines Gleitlager ausgebildet sein. Bevorzugt ist das Zentralgelenk aber als Gummilager bzw. Molekularlager ausgebildet, wobei zwischen dem Zentralgelenkgehäuse und dem Zentralgelenkinnenteil ein Elastomerkörper angeordnet ist. Mit Hilfe eines derart ausgelegten Zentralgelenkes ist es möglich, das Dämpfungsverhalten des Zentralgelenkes dahingehend zu beeinflussen, dass einige mechanische Schwingungen zumindest zum Teil im Elastomerkörper absorbiert werden. Auch können einige Stöße des Zentralgelenkgehäuses gegenüber dem Zentralgelenkinnenteil durch den Elastomerkörper in ihrer Stärke abgeschwächt werden.

Die Schwenkarme der erfindungsgemäßen Achsschwinge können jeweils eine geradlinige Verbindung zwischen dem Fahrzeugaufbau und dem Zentralgelenk bilden. Bevorzugt sind die Schwenkarme aber an ihren dem Zentralgelenk zugewandten Endbereichen abgewinkelt, wobei die beiden Schwenkarme im Bereich zwischen den Abwinkelungen und dem Zentralgelenkinnenteil im Wesentlichen parallel zueinander verlaufen. Mit einer Änderung des Ortes, wo die Abwinkelungen in den Schwenkarmen vorgesehen sind, mit einer Änderung des Abstandes zwischen den beiden im Wesentlichen parallel verlaufenden Bereichen der beiden Schwenkarme und/oder mit einer Änderung des Abstandes zwischen den beiden dem Fahrzeugaufbau zugewandten Enden der beiden Schwenkarme lässt sich das dynamische Verhalten der Achsschwinge variieren. Insbesondere können die Einfederungs- und Wankeigenschaften des Kraftfahrzeugs beeinflusst werden.

Liegen die beiden Schwenkarme über einen großen Bereich auf den beiden gleichen Schenkeln eines gleichschenkeligen Dreiecks, so ist zum Beispiel der Abstand des Zentralgelenk-Mittelpunktes zu dem Schnittpunkt der beiden gleichen Schenkel des gleichschenkeligen Dreiecks eine wichtige Größe für das dynamische Verhalten der erfindungsgemäßen Achsschwinge. Dabei kann der Zentralgelenk-Mittelpunkt auf der Winkelhalbierenden dieses gleichschenkeligen Dreiecks in, vor oder hinter dem Schnittpunkt der beiden gleichen Schenkel des gleichschenkeligen Dreiecks liegen, um so das dynamische Verhalten der Achsschwinge an die jeweiligen Anforderungen anzupassen.

Jeder der beiden Schwenkarme der erfindungsgemäßen Achsschwinge kann über ein separat ausgebildetes Schwenklager am Fahrzeugaufbau befestigt sein. Dabei kann die Verbindung zwischen dem jeweiligen Schwenkarm und dem zugeordneten Schwenklagergehäuse zum Beispiel über eine Schraubverbindung realisiert werden. Bevorzugt ist aber jeder Schwenkarm mit seinem dem Fahrzeugaufbau zugewandten Ende einstückig mit einem Schwenklagergehäuse ausgebildet, in welchem ein an dem Fahrzeugaufbau befestigtes Schwenklagerinnenteil schwenkbar gelagert ist. Hierdurch wird die Montage der erfindungsgemäßen Achsschwinge vereinfacht, da nur die Schwenklagerinnenteile an dem Fahrzeugaufbau befestigt werden müssen, um die Schwenkarme an dem Fahrzeugaufbau anzulenken. Diese einstückige Verbindung von dem Schwenklagergehäuse mit dem Schwenkarm kann zum Beispiel durch Warmverpressen oder Reibschweißen erfolgen. Auch können die beiden Schwenkarme mit den Schwenklagergehäusen als einteilige Gusskonstruktion ausgebildet sein. Als Werkstoffe können duktile kristalline Materialen, wie zum Beispiel Eisenwerkstoffe (insbesondere Stahl) oder Aluminiumlegierungen (als Leichtbauwerkstoffe) verwendet werden. Ferner sind Konstruktionen aus Faserverbundwerkstoffen oder aus mit glasfaserverstärktem Kunststoff (GFK) umspritzten Alu- und/oder Stahlblechen in Sandwich-Anordnung möglich.

Die Erfindung wird nachfolgend anhand bevorzugter Ausführungsformen unter Bezugnahme auf die Zeichnung beschrieben. In der Zeichnung zeigen:
- Figur 1: eine perspektivische Ansicht einer ersten Ausführungsform der erfindungsgemäßen Achsschwinge im eingebauten Zustand,
- Figur 2: eine vergrößerte Ansicht der Achsschwinge nach Figur 1,
- Figur 3: eine Detailansicht der Anbindung der Achsschwinge nach Figur 1 an die Kraftfahrzeugachse,
- Figur 4: eine isolierte Darstellung des Zentralgelenks der Achsschwinge nach Figur 1 und
- Figur 5: eine perspektivische Ansicht einer Ausführungsform einer nicht erfindungsgemäßen Achsschwinge.

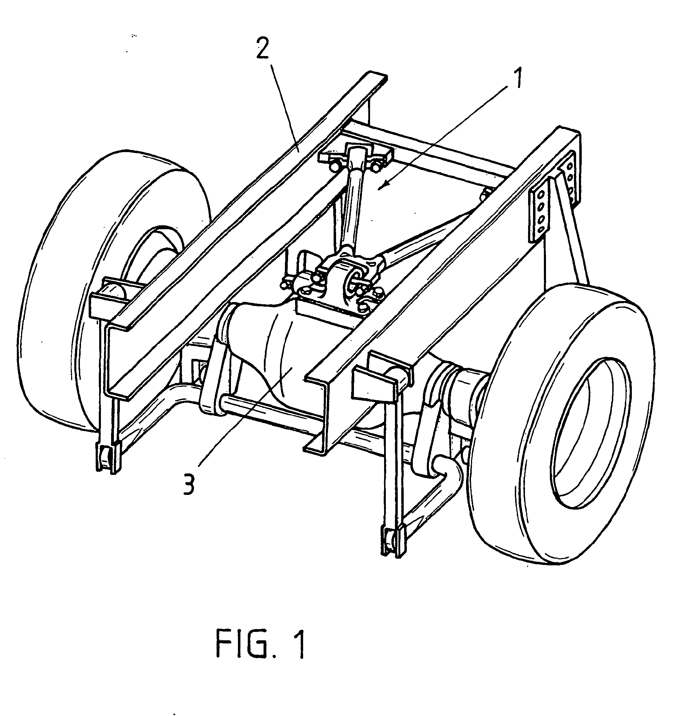

Aus Figur 1 ist eine perspektivische Ansicht einer ersten Ausführungsform der erfindungsgemäßen Achsschwinge 1 im eingebauten Zustand ersichtlich. Die Achsschwinge 1 ist sowohl mit dem Fahrzeugaufbau 2 als auch mit der Achse 3 derart verbunden, dass die Achse 3 gegenüber dem Fahrzeugaufbau 2 schwenkbar geführt ist.

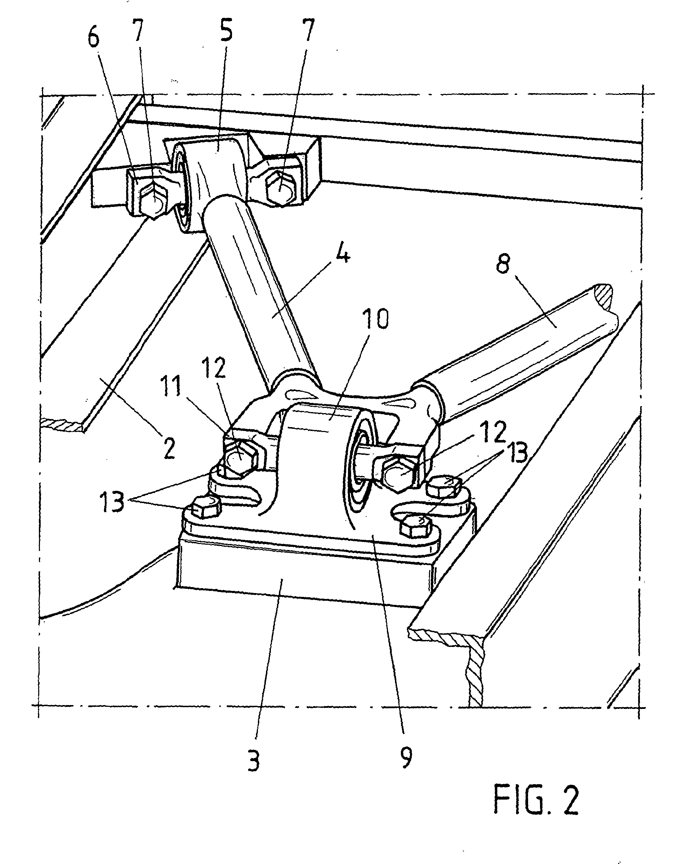

Aus Figur 2 ist eine vergrößerte Ansicht der Achsschwinge 1 gemäß der ersten Ausführungsform ersichtlich. Die Achsschwinge 1 weist einen ersten Schwenkarm 4 auf, der über ein erstes Schwenklager mit dem Fahrzeugaufbau 2 verbunden ist. Das erste Schwenklager weist ein einteilig mit dem ersten Schwenkarm 4 ausgebildetes erstes Schwenklagergehäuse 5 auf, in dem ein erstes Schwenklagerinnenteil 6 schwenkbar gelagert ist. Das erste Schwenklagerinnenteil 6 ist über Schrauben 7 an dem Fahrzeugaufbau 2 befestigt. Der zweite Schwenkarm 8 ist in gleicher Weise wie der erste Schwenkarm 4 aber an einer anderen Stelle schwenkbar an dem Fahrzeugaufbau 2 befestigt.

Die beiden Schwenkarme 4 und 8 sind mit ihren dem Fahrzeugaufbau 2 abgewandten Enden über ein Zentralgelenk und einen an diesem vorgesehenen Flansch 9 mit der Achse 3 des Kraftfahrzeugs verbunden. Das Zentralgelenk weist ein einstückig mit dem Flansch 9 ausgebildetes einteiliges Zentralgelenkgehäuse 10 auf, in welchem ein Zentralgelenkinnenteil 11 schwenkbar gelagert ist, welches mit seinen beiden als Anschlusszapfen ausgebildeten Enden an zwei einander gegenüberliegenden Seiten aus dem Zentralgelenkgehäuse 10 herausragt. Das Zentralgelenkinnenteil 11 ist über Schrauben 12 fest mit den beiden Schwenkarmen 4 und 8 verbunden. Ferner ist der Flansch 9 über Schrauben 13 fest mit der Achse 3 des Kraftfahrzeugs verbunden.

Wie aus den Figuren 1 und 2 ersichtlich, erstrecken sich die beiden Schwenkarme 4 und 8 über einen großen Bereich entlang der beiden gleichen Schenkel eines gleichschenkligen Dreiecks, wobei das Zentralgelenk auf der Winkelhalbierenden des durch die beiden Schwenkarme 4 und 8 eingeschlossenen Winkels angeordnet ist. Aus diesem Grund kann diese Achsschwinge 1 auch als Dreieckslenker zur Führung der Kraftfahrzeugachse 3 bezeichnet werden.

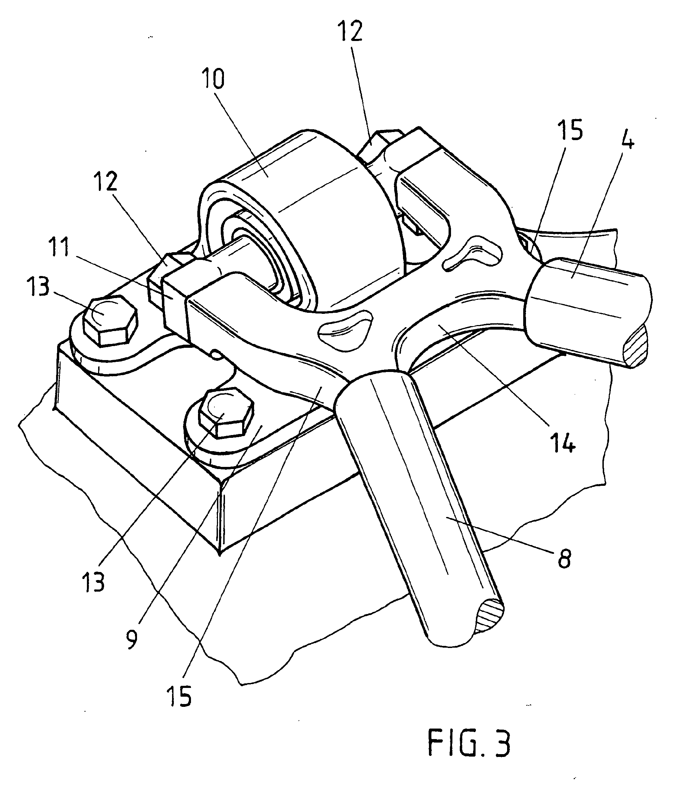

Aus Figur 3 ist eine vergrößerte Ansicht der Achsanbindung der Achsschwinge 1 nach der ersten Ausführungsform ersichtlich. Zur Erhöhung der Steifigkeit der Achsschwinge 1 sind die beiden Schwenkarme 4 und 8 an ihrem dem Zentralgelenk zugewandten Endbereichen über ein Verbindungsstück 14 fest miteinander verbunden. In jedem der Schwenkarme 4 und 8 ist ferner im Bereich des Verbindungsstücks 14 eine Abwinklung 15 vorgesehen, wobei sich die Schwenkarme 4 und 8 zwischen den Abwinkelungen 15 und dem Zentralgelenkinnenteil 11 im Wesentlichen parallel zur Winkelhalbierenden des gleichschenkeligen Dreiecks erstrecken.

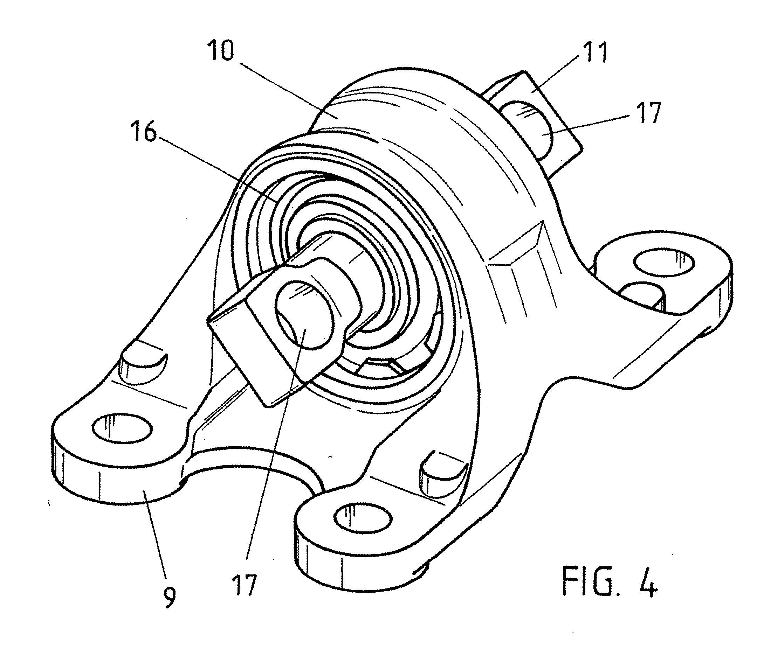

Aus Figur 4 ist das gemäß der ersten Ausführungsform verwendete Zentralgelenk ersichtlich. Das Zentralgelenk ist als Gummigelenk bzw. Molekulargelenk ausgebildet, wobei zwischen dem Zentralgelenkgehäuse 10 und dem Zentralgelenkinnenteil 11 ein aus Gummi gebildeter Elastomerkörper 16 vorgesehen ist. Der Elastomerkörper 16 beeinflusst das Schwingungsverhalten des Zentralgelenks derart, dass verschiedene störende Schwingungen von dem Elastomerkörper zu einem großen Teil absorbiert werden. Auch ein Stoß des Zentralgelenkgehäuses 10 gegenüber dem Zentralgelenkinnenteil 11 wird über den Elastomerkörper 16 nur abgeschwächt an das Zentralgelenkinnenteil 11 weitergegeben. Dies reduziert die von der Achse auf den Fahrzeugaufbau übertragenen Belastungen und erhöht den Fahrkomfort.

Wie aus der Figur ersichtlich, sind in den beiden Anschlusszapfen des Zentralgelenkinnenteils 11 Löcher 17 vorgesehen, durch die hindurch sich die Schrauben 12 zur Befestigung der beiden Schwenkarme 4 und 8 an das Zentralgelenkinnenteil 11 im montierten Zustand der Achsschwinge 1 erstrecken.

Ferner ist an dem Zentralgelenkinnenteil 11 gemäß der ersten Ausführungsform zwischen seinen beiden Anschlusszapfen ein im Zentralgelenkgehäuse 10 liegendes Kugelstück ausgebildet, welches im Zusammenwirken mit dem Elastomerkörper 1 6 und dem ausgebildet, welches im Zusammenwirken mit dem Elastomerkörper 16 und dem Zentralgelenkgehäuse 10 ein Kugelgelenk bildet.

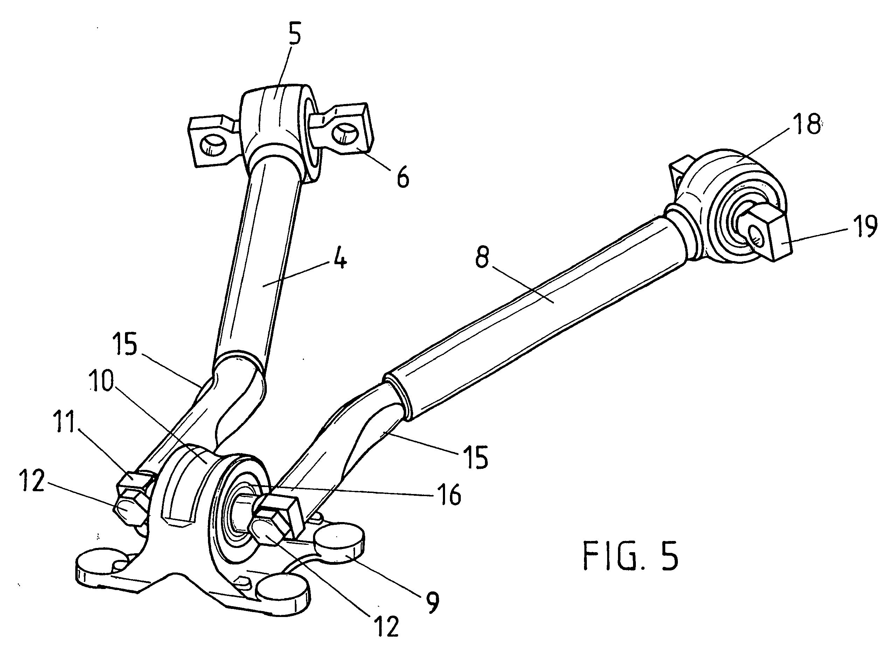

Aus Figur 5 ist eine perspektivische Ansicht einer nicht zur Erfindung gehörenden Ausführungsform einer Achsschwinge im unmontierten Zustand ersichtlich. Ein erster Schwenkarm 4 ist einstückig mit einem ersten Schwenklagergehäuse 5 ausgebildet, in welchem ein erstes Schwenklagerinnenteil 6 schwenkbar gelagert ist, über welches der erste Schwenkarm 4 am Fahrzeugaufbau des Kraftfahrzeugs befestigt werden kann. Ferner ist ein zweiter Schwenkarm 8 mit einem zweiten Schwenklagergehäuse 18 einstückig ausgebildet, in welchem ein zweites Schwenklagerinnenteil 19 schwenkbar gelagert ist, über welches der zweite Schwenkarm an dem Fahrzeugaufbau befestigt werden kann. Die beiden Schwenkarme 4 und 8 sind mit ihren von den Schwenklagergehäusen 5 und 18 abgewandten Enden an einem Zentralgelenkinnenteil 11 befestigt, welches in einem einstückig mit einem Flansch 9 ausgebildeten Zentralgelenkgehäuse 10 schwenkbar gelagert ist, der an der Achse des Kraftfahrzeugs befestigt werden kann. Zwischen dem Zentralgelenkinnenteil 11 und dem Zentralgelenkgehäuse 10 ist ferner ein Elastomerkörper 16 vorgesehen, so dass von dem Zentralgelenk ein Gummigelenk bzw. Molekulargelenk gebildet wird. Auch nach der zweiten Ausführungsform ist das Zentralgelenk als Kugelgelenk ausgebildet, wobei das Zentralgelenkinnenteil 11 ein in dem Zentralgelenkgehäuse 10 angeordnetes Kugelstück aufweist, welches zwischen den beiden als Anschlusszapfen ausgebildeten Enden des Zentralgelenkinnenteils 11 vorgesehen ist. Die Anschlusszapfen ragen dabei an zwei einander gegenüberliegenden Seiten aus dem Gelenkgehäuse 10 heraus und sind über Schrauben 12 mit den Schwenkarmen 4 und 8 fest verbunden.

Wie aus der Figur ersichtlich, ist in beiden Schwenkarmen 4 und 8 eine Abwinkelung 15 vorgesehen, wobei sich die Schwenkarme 4 und 8 zwischen der Abwinkelung 15 und dem Zentralgelenkinnenteil 11 im Wesentlichen parallel zueinander erstrecken.

Nach dieser Ausführungsform ist kein Verbindungsstück zum Verbinden der beiden Schwenkarme 4 und 8 vorgesehen. Ein solches Verbindungsstück kann aber dennoch nach der Montage der Achsschwinge an den Schwenkarmen 4 und 8 vorgesehen werden, indem ein Blech oder zwei einander gegenüberliegende Bleche an beide Schwenkarme 4 und 8 im Bereich der Abwinklung 15 angeschweißt wird bzw. werden.

Nach den bevorzugten Ausführungsformen sind die Schrauben 12 durch die Anschlusszapfen hindurch stirnseitig in die Schwenkarme 4 und 8 eingeschraubt. Es ist allerdings auch möglich, die Schrauben 12 zum Beispiel von oben (parallel zur Stirnfläche der Schwenkarme) durch die Anschlusszapfen hindurch in die Schwenkarme 4 und 8 einzuschrauben.

### Bezugszeichenliste:

- 1.: Achsschwinge
- 2.: Fahrzeugaufbau bzw. Chassis
- 3.: Achse bzw. Achskörper
- 4.: erster Schwenkarm
- 5.: erstes Schwenklagergehäuse
- 6.: erstes Schwenklagerinnteil
- 7.: Schrauben zur Befestigung des Schwenklagerinneteils am Fahrzeugaufbau
- 8.: zweiter Schwenkarm
- 9.: Flansch
- 10.: Zentralgelenkgehäuse
- 11.: Zentralgelenkinnenteil
- 12.: Schrauben zur Befestigung der Schwenkarme am Zentralgelenkinnenteil
- 13.: Schrauben zur Befestigung des Flansches an der Achse
- 14.: Verbindungsstück
- 15.: Abwinkelung
- 16.: Elastomerkörper
- 17.: Löcher in den Anschlusszapfen des Zentralgelenkinnenteils
- 18.: zweites Schwenklagergehäuse
- 19.: zweites Schwenklagerinnenteil

## Patentansprüche

1. Achsschwinge (1) zur Anbindung einer Achse (3) an den Fahrzeugaufbau (2) eines Kraftfahrzeuges, mit einem an der Achse (3) vorgesehenen Flansch (9), einem am Flansch (9) angeordneten Zentralgelenk, welches ein Zentralgelenkgehäuse (10) und ein in diesem schwenkbar gelagertes Zentralgelenkinnenteil (11) aufweist, das mit seinen beiden als Anschlusszapfen ausgebildeten Enden an zwei einander gegenüberliegenden Seiten aus dem Zentralgelenkgehäuse (10) herausragt, und zwei mit dem Zentralgelenk verbundenen Schwenkannen (4, 8), welche schwenkbar am Fahrzeugaufbau (3) befestigt sind, **dadurch gekennzeichnet, dass**
- zumindest ein Teil des Zentralgelenkgehäuses (10) einstückig mit dem Flansch (9) ausgebildet ist und
- die Schwenkarme (4, 8) mit ihren dem Zentralgelenk zugewandten Enden fest an den beiden Anschlusszapfen des Zentralgelenkinnenteils (11) befestigt sind und
- die Schwenkarme (4, 8) an ihren dem Zentralgelenk zugewandten Endbereichen über ein separates Verbindungsstück (14) fest miteinander verbunden sind.

2. Achsschwinge (1) nach Anspruch 1, **dadurch gekennzeichnet, dass** der Flansch in den Achskörper integriert ist.

3. Achsschwinge (1) nach Anspruch 1 oder 2, **dadurch gekennzeichnet, dass** das Zentralgelenkgehäuse (10) einteilig ausgebildet ist.

4. Achsschwinge (1) nach einem der Ansprüche 1 bis 3, **dadurch gekennzeichnet, dass** das Zentralgelenkinnenteil (11) zwischen den beiden Anschlusszapfen ein in dem Zentralgelenkgehäuse gelagertes Kugelstück aufweist.

5. Achsschwinge (1) nach einem der Ansprüche 1 bis 4, **dadurch gekennzeichnet, dass** zwischen dem Zentralgelenkgehäuse (10) und dem Zentralgelenkinnenteil (11) ein Elastomerkörper (16) angeordnet ist.

6. Achsschwinge (1) nach einem der Ansprüche 1 bis 5, **dadurch gekennzeichnet, dass** die Schwenkarme (4, 8) in ihren dem Zentralgelenk zugewandten Endbereichen eine Abwinkelung (15) aufweisen.

7. Achsschwinge (1) nach einem der Ansprüche 1 bis 6, **dadurch gekennzeichnet, dass** jeder der Schwenkarme (4, 8) mit seinem dem Fahrzeugaufbau (2) zugewandten Ende einstückig mit einem Schwenklagergehäuse (5, 18) verbunden ist, in welchem ein an dem Fahrzeugaufbau (2) befestigtes Schwenklagerinnenteil (6, 19) schwenkbar gelagert ist.

## Claims

1. Axle locating rod (1) for tying up an axle (3) to the vehicle body (2) of a motor vehicle, with a flange (9) provided on the axle (3), with a central joint which is arranged on the flange (9) and has a central-joint housing (10) and a central-joint inner part (11) which is pivotably mounted in the latter and projects with its two ends designed as connecting tenons out of the central-joint housing (10) onto two sides lying opposite one another, and with two pivoting arms (4, 8) which are connected to the central joint and are fastened pivotably to the vehicle body (3), **characterized in that**
- at least part of the central-joint housing (10) is formed in one piece with the flange (9), and
- the pivoting arms (4, 8) are fixedly fastened with their ends facing the central joint to two connecting tenons of the central-joint inner part (11), and
- the pivoting arms (4, 8) are fixedly connected to one another via a separate connection piece (14) at their end regions facing the central joint.

2. Axle locating rod (1) according to Claim 1, **characterized in that** the flange is integrated into the axle body.

3. Axle locating rod (1) according to Claim 1 or 2, **characterized in that** the central-joint housing (10) is formed in one part.

4. Axle locating rod (1) according to one of Claims 1 to 3, **characterized in that** the central-joint inner part (11) has between the two connecting tenons a spherical piece mounted in the central-joint housing.

5. Axle locating rod (1) according to one of Claims 1 to 4, **characterized in that** an elastomeric body (16) is arranged between the central-joint housing (10) and the central-joint inner part (11).

6. Axle locating rod (1) according to one of Claims 1 to 5, **characterized in that** the pivoting arms (4, 8) have angling (15) in their end regions facing the central joint.

7. Axle locating rod (1) according to one of Claims 1 to 6, **characterized in that** each of the pivoting arms (4, 8) is connected in one piece with its end facing the vehicle body (2) to a pivot-bearing housing (5, 18) in which a pivot-bearing inner part (6, 19) fastened to the vehicle body (2) is pivotably mounted.

## Revendications

1. Manivelle oscillante d'essieu (1) pour relier un essieu (3) à la caisse de véhicule (2) d'un véhicule automobile, avec une bride (9) prévue au niveau de l'essieu (3), une articulation centrale disposée au niveau de la bride (9) comportant un carter d'articulation centrale (10) et une partie intérieure d'articulation centrale (11) disposée de façon pivotante dans celui-ci qui ressort, avec ses deux extrémités réalisées en forme de tenons de raccordement, au niveau de deux côtés opposés, hors du carter d'articulation centrale (10), et deux bras pivotants (4, 8) reliés à l'articulation et fixés de façon pivotante à la caisse du véhicule (3), **caractérisée en ce que** :
- au moins une partie du carter d'articulation centrale (10) est réalisée d'un seul tenant avec la bride (9) ; et
- les bras pivotants (4, 8) sont fixés, avec leurs extrémités orientées vers l'articulation centrale, fixement contre les deux tenons de raccordement de la partie intérieure d'articulation centrale (11) ; et
- les bras pivotants (4, 8) sont reliés fixement entre eux au niveau de leurs zones d'extrémité orientées vers l'articulation centrale par le biais d'une pièce de jonction (14) séparée.

2. Manivelle oscillante d'essieu (1) selon la revendication 1, **caractérisée en ce que** la bride est intégrée dans le corps d'essieu.

3. Manivelle oscillante d'essieu (1) selon la revendication 1 ou 2, **caractérisée en ce que** le carter d'articulation centrale (10) est réalisé à partir d'une seule pièce.

4. Manivelle oscillante d'essieu (1) selon l'une quelconque des revendications 1 à 3, **caractérisée en ce que** la partie intérieure d'articulation centrale (11) comporte une pièce sphérique disposée dans le carter d'articulation centrale, entre les deux tenons de raccordement.

5. Manivelle oscillante d'essieu (1) selon l'une quelconque des revendications 1 à 4, **caractérisée en ce qu'**un corps en élastomère (16) est disposé entre le carter d'articulation centrale (10) et la partie intérieure d'articulation centrale (11).

6. Manivelle oscillante d'essieu (1) selon l'une quelconque des revendications 1 à 5, **caractérisée en ce que** les bras pivotants (4, 8) comportent un coude (15) dans leurs zones d'extrémité orientées vers l'articulation centrale.

7. Manivelle oscillante d'essieu (1) selon l'une quelconque des revendications 1 à 6, **caractérisée en ce que** chacun des bras pivotants (4, 8) est relié, avec son extrémité orientée vers la caisse de véhicule (2), d'un seul tenant à un carter de palier pivotant (5, 18) dans lequel une partie intérieure pivotante (6, 19) fixée au niveau de la caisse du véhicule (2) est disposée de façon à pouvoir pivoter.
